# EUROPEAN PATENT SPECIFICATION

(11) **EP 0 961 068 B1**
(45) Date of publication and mention of the grant of the patent: **17.07.2002**
(21) Application number: 99109943.3
(22) Date of filing: 20.05.1999
(51) Int. Cl.: F16L 1/09

(54) **Pipe fitting assembly tool**
Rohrverbindungswerkzeug
Outil de raccordement de tuyaux

(30) Priority: 26.05.1998 IT TO980449
(43) Date of publication of application: 01.12.1999
(73) Proprietor: Venturino, Davide, 10024 Moncalieri (TO) (IT); Crimeni, Osvaldo, 10024 Moncalieri (TO) (IT); Villois, Giorgio, 12038 Savigliano (CN) (IT)
(72) Inventor: Venturino, Davide, 10024 Moncalieri (TO) (IT); Crimeni, Osvaldo, 10024 Moncalieri (TO) (IT); Villois, Giorgio, 12038 Savigliano (CN) (IT)
(74) Representative: Lotti, Giorgio

(56) References cited:
- EP-A- 0 456 123
- US-A- 3 727 289
- US-A- 4 769 889
- US-A- 4 893 393

## Description

The present invention relates to a restrained coupling machine for crop-ends and/or fittings of pipe, particularly pipes which present a large diameter and are made of plastic material.

Normally, the crop-ends/fitting of pipe, which present a large diameter and are mostly made of polyethylene, are manufactured in crop-ends with a predetermined length, and are used to build mains, often underground, for liquids or fluids.

These crop-ends and fittings are provided, at one of their ends, with an oversized section portion which is able to receive a non-oversized end of another crop-end and/or fitting, so as to realise mains of the desired length. Therefore, these mains are built with a number of coupled crop-ends and/or fittings presenting their relevant ends restrained by each other.

For the purpose of ensuring a better leak-proof sealing at the connection between two fittings, and particularly near the inner surface of the oversized section portion, an annular gasket made of elastomer material or rubber is applied by means of glueing or it is fit to an expressly made seat. This gasket, even if it, on the one hand, ensures the leak-proof sealing of the connection, on the other hand it makes the restrained coupling of the two pipes fitting very difficult. Particularly, when these pipes have a very large diameter, and their coupling and decoupling needs the strength of at least two people.

Actually, a considerable axial thrust must be applied to one of the two pipes to manage to overcome the obstacle presented by the gasket and to completely insert the end of one pipe in the oversized section portion of the other pipe, which, at the same time, must be maintained in a well-arranged position for the insertion.

Small tools for displacing ends of pipes towards or away from one another, comprising first and second pipe gripping members and guide means for permitting movement of the gripping members towards and away from one another are disclosed in US-A-4893393, on which is based of the preamble of claim 1, US-A-3727289 and US-A-4769889.

Nevertheless their guide means are not adapted to support high radial thrusts present in coupling of pipes with considerable diameter provided with a gasket.

One aim of the present invention is to realise a machine which is able to carry out this operation in a convenient way and without excessive exertion, and which eventually allows one person to do the whole operation by himself.

Said and further aims are gained by a restrained coupling machine which has the of Claim 1.

Further characteristics and advantages will appear clear from the following description, with reference to the accompanying drawings, which are given by the way of a non-limitative example and in which:

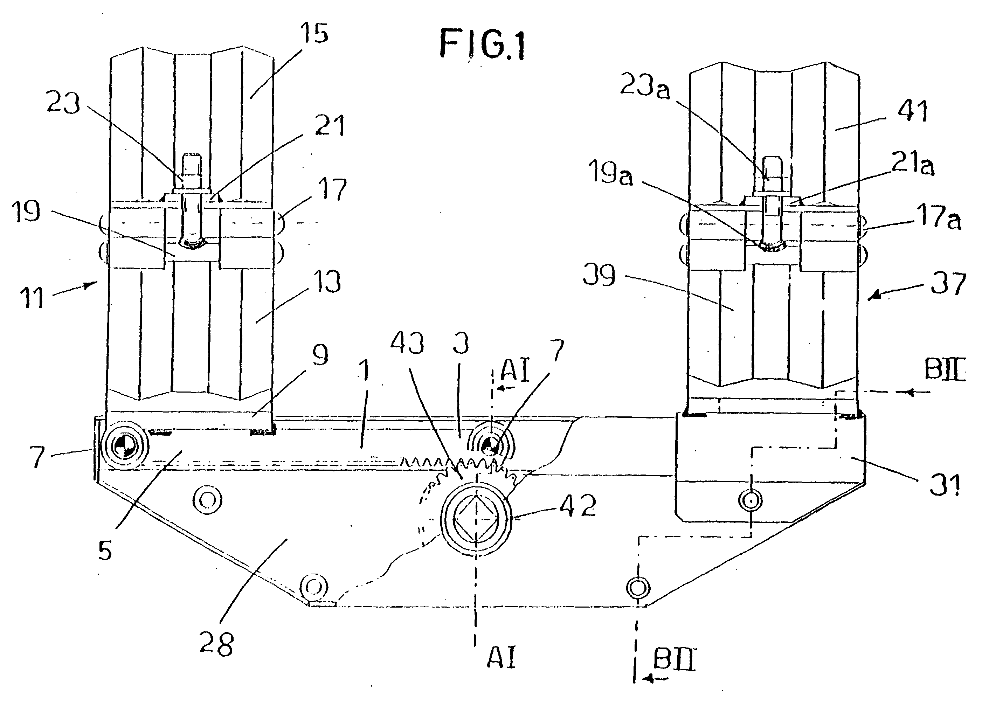

- FIG. 1: is a frontal view of the machine according to the present invention;

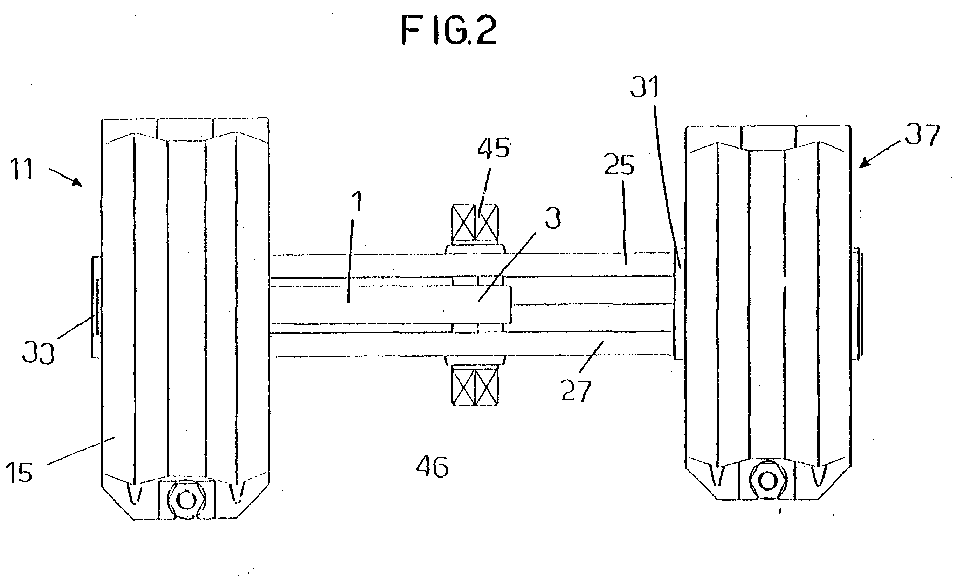

- FIG. 2: is a top view of the machine shown in FIG. 1;

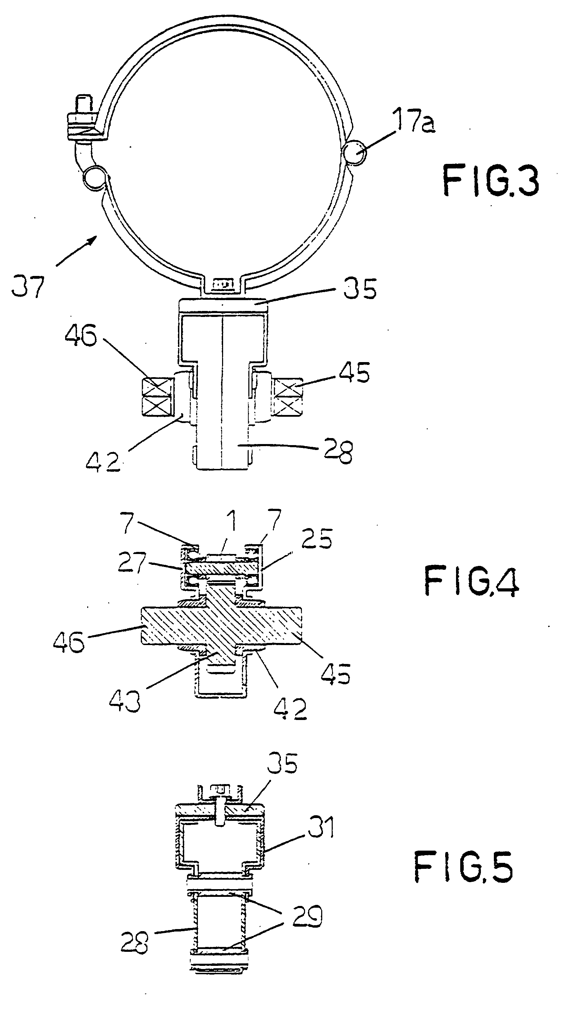

- FIG. 3: is a reduced side elevation view of the machine shown in FIG. 1;
- FIG. 4: is a reduced cross-section taken through the line I-I of FIG. 1; and
- FIG. 5: is a reduced cross-section taken through the line II-II of FIG. 1.

With reference to the drawings, number 1 indicates a rack provided at its relevant ends 3 and 5 with two couples of bearings 7, which have the function of support wheels and of translation.

One end of rack is integral with a support 9 on which an annular bracket 11, composed of two parts 13 and 15, is fixed. The two semi-annular parts are hinged to each other at one of their relevant ends by a hinge 17, meanwhile, they are provided with a coupling system at the other opposite end: the system is adjustable to clamp the pipe and/or the pipe-fitting, and, in the example illustrated, it is composed of a T-headed bolt 19, which is held in a slot made at the end of one of the two semi-annular parts and in a seat 21. The seat 21 is connected to the end of the other semi-annular part, and is provided with a nut 23, which is screwable on the shank of the bolt 19. In this way, both the distance between the two ends and the bracket's inner diameter can be varied.

The bearings 7 run along two side-by-side guides 25 and 27, which are U-shaped to maintain them in a radial direction. Each guide has one extension which allows the realisation of a trapezoidal-shaped holding body 28, whichs help to oppose the radial thrust applied to the end of the guide. The guides are maintained parallel to each other and are coupled by means of riveted pins 29 and a support 31 integral with one of their ends and copying the guides' external shape, meanwhile the other ends are connected to each other by means of a stiffening staple 33.

The top portion of the support 31 is provided with a stiffening plate 35, on which a second annular bracket 37 is fixed in a well-known way. The bracket 37, composed of two semi-rings 39 and 41, has its own diameter which is smaller than the diameter of the first bracket 11, and is substantially equal to the external diameter of the pipes to be coupled by restraining.

The second bracket 37 and the first bracket 11 have the same structure, and so the second bracket 37 is provided with a hinge 17a and a fixing system composed by a T-headed bolt 19a which is held in a slot made at the end of one of the two semi-rings and in a seat 21a. The seat 21a is connected to the end of the other semi-ring and it is provided with a nut 23a which is screwable onto the shank of the bolt 19a. In this way it is possible to vary the distance between the two ends connected as described above.

A circular seat 42 is provided in the holding body 28 for supporting a gear 43 coupled to the rack 1. The gear 43 is provided with two axial squared projections 45 and 46 which, as they protrude from the body 28, can be utilised by means of a suitable lever or key to make the gear 43 rotate and, consequently, to make the rack 1 move along the guides 25 and 27.

The utilisation of the described machine is quite simple.

It is sufficient, to couple pipes and/or fitting-pipes, to fix the normal diameter end of one of them in the relevant bracket 37, clamping the end by means of the fixing system with bolt 19a and nut 23a. The oversized section end of the pipe or fitting-pipe to be coupled will be clamped in the other bracket 11 in the same way, so as to position the two crop-ends coaxial to each other.

When the suitable levers/keys are used to cause the rotation of the gear 43, the rack will slide on the wheel 7 along the guides 25 and 27, with the consequent translation of the first bracket 11 towards the second bracket 37. In this way, the two elements will draw closer to each other until they fix one inside the other, overcoming the gasket's resistance. The whole operation can be realised by only one person without any excessive exertion.

The machine according to the invention could eventually also be used in the opposite way, that is to separate the two previously restrained fitting-pipes.

The operation only requires the rotation of the gear 43 after the fixing of the two tubular elements to move the brackets away from each other and, thus, the fitting-pipes.

## Claims

1. Restrained coupling machine for crop-ends and/or fittings of pipe, particularly pipes and fitting-pipes, with a considerable diameter and made of plastic material, provided with an oversized diameter end portion, which has inner leak-proof means, and is able to fit onto a normal diameter end portion of another crop-end or fitting of pipe to which has to be coupled, comprising at least a couple of brackets (11, 37), each of them is provided with its own fixing means (17, 17a, 19, 19a, 23, 23a) on at least one of the crop-ends or fittings to be coupled; **characterised by** the fact that said brackets are mutually translatable in a coaxial direction by means (1, 7, 25, 27, 43) comprising a rack (1), one end of which is integral with one of the two brackets (11), and that it is provided with lateral wheels for its translation along guides (25, 27) one end of wich is integral with the other one of the two brackets (27) each guide having one extension forming a trapezoidal-shaped holding body (28).

2. Machine as claimed in claim 1, **characterised by** the fact that the guides (25, 27) have an U shape suitable for preventing the wheels from coming off the guides in a radial direction.

3. Machine as claimed in claim 2, **characterised by** the fact that the guides defines a mounting seat (42) for an operating gear (43) of the rack (1).

4. Machine as claimed in claim 1, **characterised by** the fact that the means for translating the brackets comprise a hydraulic or pneumatic cylinder.

## Patentansprüche

1. Eingespannte Kupplungsmaschine für Rohrenden und/oder Befestigungen von Rohren, insbesondere von Rohren und Rohrbefestigungen mit einem beträchtlichen Durchmesser und aus einem Plastikmaterial, versehen mit einem Endteil mit einem überdimensionierten Durchmesser, der innere lecksichere Mittel aufweist und dazu in der Lage ist, auf einen Endabschnitt mit einem normalen Durchmesser eines anderen Rohrendes oder einer Befestigung eines Rohres, mit dem es gekoppelt werden soll, zu passen, umfassend mindestens ein Paar Klammern (11, 37) von denen jede mit ihren eigenen Befestigungsmitteln (17, 17a, 19, 19a, 23, 23a) auf mindestens einem der Rohrenden oder der Befestigungen, die gekoppelt werden sollen, versehen ist, **dadurch gekennzeichnet, daß** die Klammern gegenseitig durch Mittel (1, 7, 25, 27, 43) in eine koaxiale Richtung übertragen werden können, umfassend einen Rahmen (1), von dem ein Ende mit einem der zwei Klammern (11) einstückig ist, und daß er mit seitlichen Rädern für seine Übertragung entlang von Führungen (25, 27) versehen ist, von denen ein Ende mit der anderen der zwei Klammern (27) einstückig ist, wobei jede Führung eine Erweiterung aufweist, die einen trapezförmigen Haltekörper (28) bildet.

2. Maschine nach Anspruch 1, **dadurch gekennzeichnet, daß** die Führungen (25, 27) eine U-Form aufweisen, die dazu geeignet ist, zu verhindern, daß die Räder in einer radialen Richtung von den Führungen abfallen.

3. Maschine nach Anspruch 2, **dadurch gekennzeichnet, daß** die Führungen eine Befestigungsauflagefläche (42) für ein Betriebszahnrad (43) des Rahmens (1) festlegen.

4. Maschine nach Anspruch 1, **dadurch gekennzeichnet, daß** die Mittel zum Übertragen der Klammern einen hydraulischen oder pneumatischen Zylinder umfassen.

## Revendications

1. Machine d'accouplement encastré pour extrémités décolletées et/ou raccords de tubes, en particulier de tubes et de tubes de raccordement, avec un diamètre considérable et constitués de matériau plastique, fournis avec une partie d'extrémité de diamètre surdimensionné, qui comporte un moyen d'étanchéité intérieur, et qui peut s'adapter sur une partie d'extrémité de diamètre normal d'une autre extrémité décolletée ou d'un raccord de tube auquel elle doit être accouplée, comprenant au moins une paire de brides (11, 37), dont chacune est équipée de son propre moyen de fixation (17, 17a, 19, 19a, 23, 23a) sur l'une au moins des deux extrémités décolletées ou raccords à accoupler, **caractérisée en ce que** lesdites brides peuvent être mutuellement translatées dans une direction coaxiale par des moyens (1, 7, 25, 27, 43) comprenant une crémaillère (1), dont une extrémité est d'une pièce avec l'une des deux brides (11), et qui est équipée de roues latérales pour sa translation le long de guides (25, 27) dont une extrémité est d'une pièce avec l'autre des deux brides (27), chaque guide présentant une extension formant un élément de fixation de forme trapézoïdale (28).

2. Machine selon la revendication 1, **caractérisée en ce que** les guides (25, 27) ont une forme en U permettant d'éviter que les roues ne s'échappent des guides dans une direction radiale.

3. Machine selon la revendication 2, **caractérisée en ce que** les guides définissent un siège de montage (42) pour un pignon d'actionnement (43) de la crémaillère (1).

4. Machine selon la revendication 1, **caractérisée en ce que** le moyen de translation des brides comprend un vérin hydraulique ou pneumatique.
